# EUROPEAN PATENT SPECIFICATION

(11) **EP 4 415 001 B1**
(45) Date of publication and mention of the grant of the patent: **11.03.2026**
(21) Application number: 21959805.9
(22) Date of filing: 05.10.2021
(51) Int. Cl.: G21C 7/22, G21C 9/033, B01F 23/50, B01F 33/502, B01F 35/21, B01F 35/221, B01F 35/71, B01F 35/93, B01F 35/90

(54) **PORTABLE DEVICE FOR THE BORATION OF CONTINUOUSLY FLOWING WATER**
TRAGBARE VORRICHTUNG ZUM BORIEREN VON KONTINUIERLICH FLIESSENDEM WASSER
ÉQUIPEMENT PORTABLE D'ADDITION DE BORE DANS DES EAUX À ÉCOULEMENT CONTINU

(43) Date of publication of application: 14.08.2024
(73) Proprietor: Ingeniería Y Marketing, S.A., 46980 Paterna Valencia (ES)
(72) Inventor: ALCARAZ PIETERS, Daniel Arturo, 46980 PATERNA (Valencia) (ES); TRAINO, Julie, 46980 PATERNA (Valencia) (ES); ARNALDOS GONZÁLVEZ, Adoración, 46980 PATERNA (Valencia) (ES); PONCE SERRANO, Amparo Trinidad, 46980 PATERNA (Valencia) (ES); BARBERO, Judith, 46980 PATERNA (Valencia) (ES)
(74) Representative: Sanz-Bermell Martinez, Alejandro
(86) International application number: PCT/ES2021/070725
(87) International publication number: WO 2023/057660

(56) References cited:
- WO-A1-2013/158691
- WO-A1-2015/079075
- DE-U1- 202014 102 049
- KR-A- 20190 066 851
- KR-A- 20190 100 718
- US-A- 4 614 146
- US-A- 5 580 168
- US-A1- 2003 227 819
- US-B2- 10 210 957
- US-B2- 9 266 756

## Description

### Field of the invention

The object of the present invention relates to a device for dissolving boron compounds in continuously flowing water in order to keep the reactor of a nuclear power plant below criticality conditions, in addition to cooling the reactor pool or spent fuel pools.

The problem that arose at the Fukushima thermonuclear power plant in Japan is widely known, where the lack of cooling of the different reactors caused an out-of-control reaction with well-known consequences, causing a diffusion of radioactivity throughout the environment and the need to evacuate the civilian population.

A reaction in which fuel is immersed in a solution of borated water, which allows a self-sustained fission reaction, takes place in nuclear power plants. Boron is a neutron scavenger that is ideal for neutralising the nuclear fuel reaction. The use of boron solutions depending on the concentration of boron in the water allows keeping the fission reaction stable, increasing the reaction, or stopping same when the concentrations are high.

The cooling of the circuits, primary circuits, and storage pools is performed by means of borated water.

In power plants, there are usually storage tanks provided with water containing boron compounds in solution, for example, boric acid, usually kept at a certain temperature to prevent precipitation and maintain the desired concentration. However, these tanks have limited dimensions and are not capable of supplying a continuous flow for more than a few hours, in the event that this is necessary.

Therefore, borated water supply facilities may not be available for use in times of emergency when it is required to a sufficient extent, thus making it necessary to have external borated water supply means to maintain the cooling of the systems and the reduction of the reaction.

The safety systems of a nuclear power plant include a set of electrical accumulators that are capable of supplying power to all the systems for tens of hours, and also a set of generators, usually operated by means of diesel engines, which are activated immediately and automatically when a power failure is detected in the power plant.

Therefore, usually said external cooling will not be essential during the first hours, so it is sufficient to have the system available a few hours after the failure of the power plant.

Therefore, there is proposed a mobile facility for supplying continuously flowing borated water which comprises means for adapting an external water source and regulating said source, a device for mixing the corresponding components, and pumping devices, all of them contained in a 20-foot maritime container.

### Background of the invention

Document KR 2012 0039161 discloses an apparatus for automatically controlling the concentration of boron in a nuclear reactor in order to perform the required daily loading.

The invention comprises a temperature indicator, an axial direction power distribution signal, and a control rod position signal.

Document SE 98 00940 A describes a system for shutting down a PWR or BWR nuclear reactor having devices which allow boron to be introduced in the coolant. A method for said shut-down which includes adding boron to the coolant in order to reduce the radioactivity levels in the reactor core is also described.

Document JP 2012 083113 describes a control device which controls the flow rate and the concentration of boron in a tank for controlling the volume of the coolant that must be supplied to the reactor. The mixing ratio between a boric acid solution and a target concentration of the primary coolant is determined.

Document DE 3618966 A1 describes an arrangement for safeguarding the fuel chamber of a nuclear reactor against overheating. A neutron-absorbing material, formed by granules of oxides or salts having a high neutron absorption capacity, formed by silica, sodium oxide, gadolinium oxide, boron oxide, among others, is provided.

Document US 4844856 A describes a process for automatic regulation of the soluble boron content of the cooling water of a pressurised nuclear reactor, the boration areas of the means of boration and of the means of dilution are determined a priori, corresponding to pairs of values of two control parameters relating to the position of the reactor regulating group in the core and to the deviation of the axial power imbalance.

Document US 4582672 A describes a method for preventing inadvertent criticality in a nuclear fuelled electric power generating unit, in which water with a large amount of boron is injected into the reactor to keep the reactor in subcritical conditions.

Document CA 1136778 A1 describes an apparatus for boron addition to primary coolant of a water-cooled nuclear reactor system. Boric acid is injected into the primary coolant to ensure sufficient shutdown reactivity in the event of an accident. The method comprises heating a molten boric acid and water solution in a storage vessel, creating sufficient pressure from the steam cushion which is generated to inject the solution into the reactor coolant.

Document WO 2013/158691 A1 relates to a mobile boration system having a number of components that are mobile and include a water source, H2B03 powder supply, a mixer to mix the solution capable of providing a boric acid solution with minimal air entrainment, and optional heat exchanger(s), the system being capable of transport to a nuclear power plant facility by land, sea, or air.

Document EP 2600351 A1 describes an assembly and method for water injection of a neutron absorber element for cooling a nuclear reactor core in a crisis situation, having a main pipe including an end for connection to a water supply and another end for connection to a circuit connected to a primary circuit of a nuclear reactor, wherein a pump and a water heating device are provided between the ends of the pipe. An injector allows continuous injection of water, for example, fresh water, in the pipe to a neutron absorbing powder, for example, borate, and a mechanical mixer mixes and dissolves the powder with the water. A control unit controls and monitors the flow of water and the flow of the injected powder.

Although all these inventions contemplate different ways of introducing borated water in the reactor, all of them are integrated in the ordinary working process of the power plant and do not solve the problem in the event of a loss of control or catastrophe in said power plant, in which there is a need to have borated water available in large amounts, without depending on the facilities of the power plant itself, since they may no longer be operational.

Document PCTES2013070820 is the prior art document closest to the present invention. Said document describes a device for the boration of continuously flowing water that does not depend on the facilities of the power plant itself and allows ease of transport and use as a borated water supply element by means of connection thereof to a power source, for example, a portable generator, and by means of connection thereof to a water supply.

The present invention has the following advantages with respect to document PCTES2013070820:
- It is a more compact and easily transportable system. While the preceding device was transported in two containers, this device can be transported by means of a single container.
- It is a simpler system. The device object of the present invention comprises a smaller number of elements than the device described in the preceding document, which entails greater reliability (since a smaller number of components are susceptible to malfunctions) and greater ease of assembly and transport.
- It is a safer system for operators as it comprises systems that eliminate the presence of boric acid powder in the atmosphere of the container that transports the device, which can be harmful to the health of the operators if they are exposed thereto.
- It is a system with a higher degree of automation, in which only the work of an operator is necessary for loading the bags of boric acid, where said loading can be performed by means of an external crane or a forklift.
- By means of the device object of the present invention, a better utilisation of the materials is achieved, since it incorporates means that improve and ensure the emptying of the bags of boric acid powder.
- It is a more versatile device since it incorporates more water inlet lines, a surplus line so that it can work with a flow rate lower than the minimum operating flow rate of the feed pump, and different water outlet lines that can be configured by means of a set of valves to distribute various flows of borated water, or borated water and raw water, depending on the required needs. Document US 10 210 957 B2 discloses the preamble of claim 1.

### Description of the invention

The present invention consists of a device for the boration of continuously flowing water, which can be easily transported and allow the quick use thereof by simply connecting the corresponding conduits and the power source, such as a portable generator.

The device is formed by the following elements:
- A mechanical mixer which can facilitate the dissolution of boric acid in water. Preferably, the mechanical mixer is a cylindrical mixer with a frustoconical base, comprising a stirring vane and deflector plates. Preferably, the mixer incorporates electrical resistors to compensate for the heat loss caused by the endothermic reaction of dissolving boric acid in water, preventing the crystallisation of boric acid in the case of reduced room and water temperatures.
- At least one raw water inlet line for the entry of raw water into the mixer with an inlet opening. Preferably, the raw water inlet line comprises means for regulating the flow rate of the raw water entering the mixer. Optionally, the water inlet line is fed both by a main raw water inlet line and by a secondary raw water inlet line which allows a second raw water supply source to be connected.
- Optionally, the device comprises a surplus line, which allows operating with flow rates lower than the minimum operating flow rate of a supply pump.
- At least one water outlet line for the exit of water from the mixer. Optionally, the device comprises a second water outlet for the exit of water from the mixer, which allows borated water to be injected into a second consumer, for example, a tanker truck. Optionally, there is a bypass line between the inlet line and at least one of the outlet lines, which allows injecting borated water into a first consumer and raw water into a second consumer, in parallel.
- A boric acid feeding system for feeding boric acid to the reactor.

First, the boric acid feeding system is formed by a support structure on which a bag of boric acid, of those so-called "big bags", usually with a capacity for 1000 kg of product, is deposited.

The support structure is preferably arranged on a lifting system, for example, a telescopic structure, which allows lifting same in order to facilitate the arrangement of the bags of boric acid by means of a forklift or a lifting crane, even with said structure being arranged above the upper surface of the container. In this latter case, the container comprises an opening with a removable or retractable cover to allow said structure to peek out from the upper surface thereof. The structure can further comprise manually or automatically removable or retractable upper and lower lids.

The bags are opened when their presence is detected in the structure by means of sensors, by means of a set of automatically-acting blades, making cuts in the lower part of the bag which allow the emptying of the contents thereof.

Optionally, for the complete emptying of the contents of the bag of boric acid, the structure comprises a set of "massaging elements" for the bag formed by a set of pneumatic cylinders which press on the bag and ensure that all the product inside the bag is emptied.

Under the structure for emptying the bags of boric acid, there is arranged a conical tank which allows storing the product poured from the bag for a time period in which the empty bag is replaced with a new, product-filled bag. The system has a warning system for warning that the product in the bag has been emptied, so that an operator can remove the empty bag and place a new bag on the structure.

The product poured into the conical tank is directed towards a conveyor which conveys the boric acid powder to the mixer, with the concentration of boric acid in the water of the mixer being adjusted by means of varying the speed of said conveyor. The speed of the conveyor can be adjusted automatically based on the parameters of the required concentration. Preferably, the conveyor is a screw conveyor which directs the boric acid powder from the lower part of the conical tank to the upper part of the mixer, from where the boric acid is poured into the mixer.

A crushing system, preferably formed by a roller crusher, is arranged between the conical tank and the conveyor. This system ensures that no boric acid stones or agglomerations are formed, so the boric acid is supplied to the mixer in powder form, which facilitates and optimises its dissolution in the raw water.

There is arranged, between the emptying structure and the conical tank, a capture system connected to a boric acid powder suction system, with self-cleaning filters, and a confinement system for confining said boric acid powder. Said system prevents airborne particles or particles not directed to the conical tank from remaining in the atmosphere of the container, which can pose a risk to operators.
- A monitoring and control system formed by the following elements:
   ∘ an automaton: The automaton manages the different instrumentation signals, alarms due to abnormal operation values, and the execution of the different automatic operations (managing water level in the mixer, regulating the flow rates of water entering and exiting the mixer, managing the speed of the boric acid conveyor based on the flow rate of inflowing water to regulate the concentration of boric acid in the water, controlling water temperature, and actuating the heating resistors, it also regulates the operation of the blades for opening the bags of boric acid when the presence of the bags in the support structure is detected, management of the valves of the main and secondary outlet lines to supply a single flow of borated water, a flow of borated water and another flow of raw water, or two flows of borated water, etc.).
   ∘ HMI (human-machine interface) display: The display allows viewing the operative state of the system, as well as performing relevant adjustments (required concentration of boron, operating mode, etc.).
   ∘ Remote monitoring device: Through this device, the operator can know the operative state of the system remotely, receiving alarms when the system requires attention (changing the bag of boric acid, malfunction of any component, etc.). In this way, the operators are in a protected area during the operation of the system, minimising the doses received.
- A shielding system which protects the elements with higher radiosensitivity such as the electrical panel with the automaton and all the instrumentation.
- Optionally, the container has a hook for a truck with an "Ampliroll" system, a hook hydraulically moved with hydraulic cylinders, installed in a conventional chassis that picks up container boxes from the ground and assembles them on the chassis and leaves empty container boxes in place to be filled. In this way, the loading and unloading of the device for boration can take place more easily and quickly, which is desirable in emergency situations.
- The device is complemented with a generator set for electrically powering the systems of the device.
- Optionally, the device has housings for storing tools and auxiliary elements.

### Brief description of the drawings

To complement the description that is being made and for the purpose of helping to better understand the features of the invention, according to a preferred practical exemplary embodiment thereof, a set of figures is attached as an integral part of said description wherein the following has been depicted with an illustrative and non-limiting character:

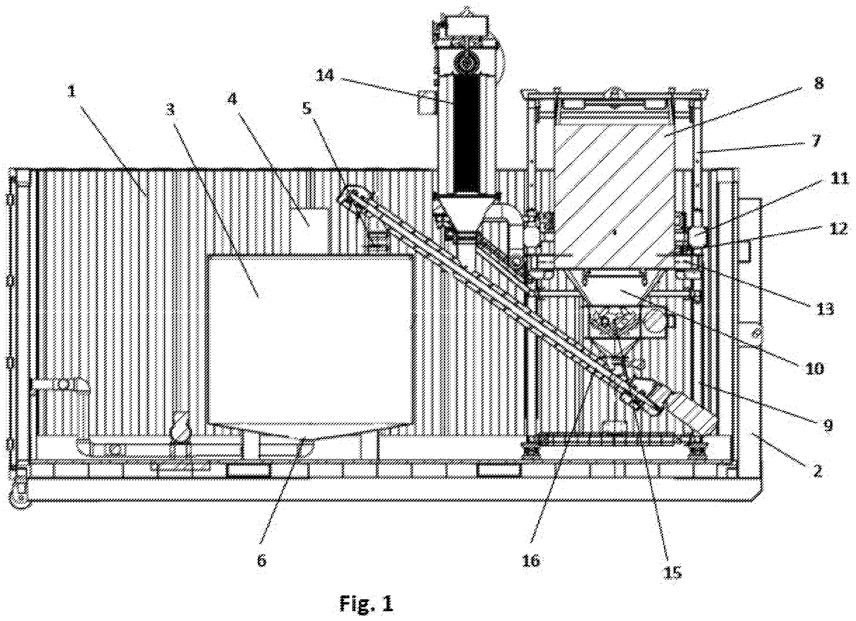

Figure 1 shows a schematic view of the portable device for the boration of continuously flowing water, according to an embodiment option of the present invention.

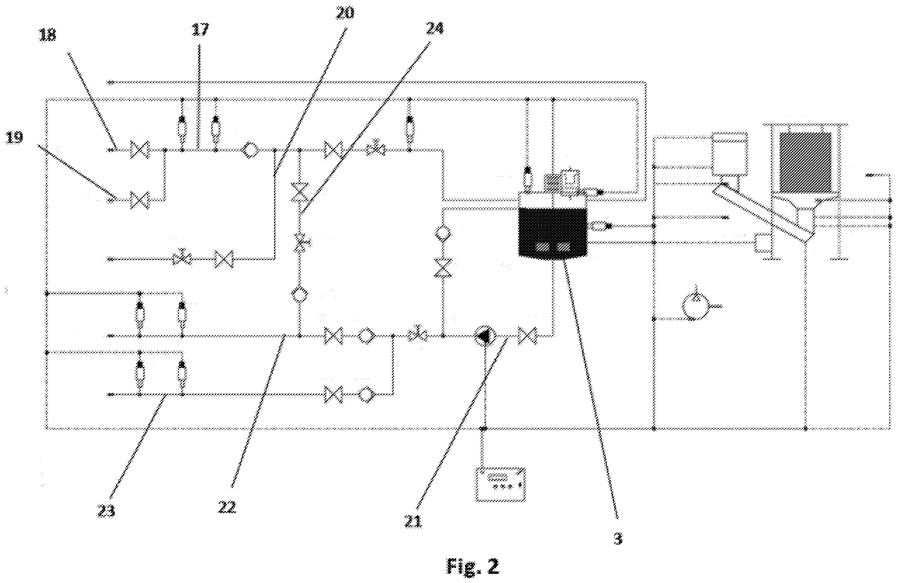

Figure 2 shows a P&ID diagram of the portable device for the boration of continuously flowing water, according to an embodiment option of the present invention.

### Description of the embodiments of the invention

In view of the aforementioned figures and according to the numbering adopted, a preferred exemplary embodiment of the invention can be seen therein, which comprises the portions and elements that are indicated and described in detail below.

As described above, the portable device for the boration of continuously flowing water is integrated in a container (1), preferably a 20-foot container. Said container comprises a hook (2) for a truck with an "Ampliroll" system.

The portable device for the boration of continuously flowing water comprises a raw water inlet line (17) for the entry of raw water into the mixer (3) and a borated water outlet line for the exit of borated water from the mixer (21).

The raw water inlet line (17) is fed both by a main raw water inlet line (18) and by a secondary raw water inlet line (19) which allows a second raw water supply source to be connected.

Connected to the water inlet line (17) there is furthermore a surplus line (20), which allows operating with flow rates lower than the minimum operating flow rate of the supply pump. Therefore, excess water flow is evacuated through said surplus line once it has been driven by the pump.

The device further comprises a borated water outlet line (21) for the exit of borated water from the mixer (3). Said borated water outlet line (21) is split into a main outlet line (22) and a secondary outlet line (23), such that borated water can be injected into a second consumer, for example, a tanker truck.

There is furthermore a bypass line (24) between the inlet line (17) and the main outlet line (22), so raw water can be injected into a first consumer through the main outlet line (22) and borated water can be injected into a second consumer through the secondary outlet line (23). The regulation of the flows of said lines (21, 22, 23, 24) is regulated by means of a set of valves, preferably solenoid valves operated through an automaton installed in the device.

A cylindrical mixer (3) with a frustoconical base, comprising a stirring vane and deflector plates, is arranged inside the container (1). The mixer incorporates electrical resistors to compensate for the heat loss caused by the endothermic reaction of dissolving boric acid in water, preventing the crystallisation of boric acid in the case of reduced room and water temperatures.

The mixer (3) comprises a raw water inlet opening (4) for the entry of raw water coming from the inlet line (17), a boric acid powder inlet (5), and a borated water outlet opening (6) directed towards the borated water outlet line (21). The device comprises components which allow adapting the system to an external raw water source and regulating the operating point thereof, in addition to pumping means for the water outlet lines (21, 22, 23). Preferably, the injection of borated water into the consumer(s) is performed by means of a centrifugal wet-rotor pump, wherein the pump performs suction directly from the bottom of the mixer.

A support structure (7) on which a bag (8) of boric acid ("big bag") is deposited is furthermore installed in the container (1).

The support structure (7) is installed on a telescopic structure (9), susceptible of lifting the support structure (7) in order to facilitate the supply of bags (8) of boric acid.

There is arranged in the lower part of the structure (7) a set of blades (12) which act automatically when the presence of a bag (8) of boric acid is detected, making cuts in the lower part of the bag (8) which allow the emptying of the contents thereof into a conical tank (10). The system has a warning system for warning that the product in the bag has been emptied, so that an operator can remove the empty bag and place a new bag on the structure (7). The function of the conical tank (10) is to house a sufficient amount of product so that the feeding of boric acid does not stop while removing the empty bag (8) and providing a product-filled bag.

For the complete emptying of the contents of the bag of boric acid, the structure comprises a set of "massaging elements" for the bag formed by a set of pneumatic cylinders (11) which press on the bag and ensure that all the product inside the bag is emptied.

There is arranged, between the emptying structure and the conical tank, a capture system connected to a boric acid powder suction system, with self-cleaning filters, and a confinement system for confining said boric acid powder. Said system prevents airborne particles or particles not directed to the conical tank from remaining in the atmosphere of the container, which can pose a risk to operators. The capture system is formed by a capture ring (13) through which the powder is suctioned and directed towards a confinement tank (14). The suctioned air is evacuated after passage through a set of self-cleaning filters.

The product poured into the conical tank (10) is poured onto a conveyor (16) which, in the embodiment shown, is an adjustable-speed screw conveyor which conveys boric acid powder from the lower part of the conical tank (10) to the boric acid inlet opening (5) arranged in the upper part of the mixer (3), from where the boric acid is poured into the mixer (3).

A roller crusher (15) is arranged between the conical tank and the conveyor. This system ensures that no boric acid stones or agglomerations are formed, so the boric acid is supplied to the mixer in powder form, which facilitates and optimises its dissolution in the raw water.

## Claims

1. A portable device for the boration of continuously flowing water, comprising:
• a mechanical mixer (3), the mixer (3) comprises a raw water inlet opening (4), a boric acid powder inlet (5), and a borated water outlet opening (6) directed towards a borated water outlet line (21); wherein the mixer incorporates electrical resistors,
• a raw water inlet line (17) for the entry of raw water into the mixer (3) provided with flow rate regulating means;
• a boric acid powder feeding system provided with a variable-speed conveyor (16) for conveying boric acid powder to the boric acid inlet (5) of the mixer (3);
• an outlet line (21) of the mixer provided with pumping means and flow rate regulating means;
**characterised in that**:
the device is integrated in a transport container (1);
and **in that** the boric acid powder feeding system is provided with a system for detecting and automatically opening a bag (8) of boric acid powder;
and **in that** the device comprises a monitoring and control system formed by the following elements:
∘ an automaton which manages the different instrumentation signals, alarms due to abnormal operation values, and the execution of the following automatic operations:
▪ managing water level in the mixer by means of regulating the flow rates of water entering and exiting the mixer;
▪ managing the speed of the boric acid conveyor based on the flow rate of inflowing water to regulate the concentration of boric acid,
▪ controlling water temperature and actuating the electrical resistors of the mixer,
▪ managing the system for detecting and automatically opening a bag of boric acid powder ;
o a remote monitoring device through which the operator can know the operative state of the system remotely, receiving alarms when the system requires attention.

2. The portable device for the boration of continuously flowing water according to claim 1, **characterised in that** the monitoring and control system further comprises an HMI, human-machine interface, display which allows viewing the operative state of the system, as well as performing relevant adjustments.

3. The portable device for the boration of continuously flowing water according to any of claims 1 to 2, **characterised in that** connected to the water inlet line (17) there is furthermore a surplus line (20), which allows operating with flow rates lower than the minimum operating flow rate of a supply pump.

4. The portable device for the boration of continuously flowing water according to any of claims 1 to 3, **characterised in that** the borated water outlet line (21) is split into a main outlet line (22) and a secondary outlet line (23), wherein the automaton regulates the operation of the valves of the outlet lines based on consumers' requirements.

5. The portable device for the boration of continuously flowing water according to any of claims 1 to 4, **characterised in that** there is furthermore a bypass line (24) between the inlet line (17) and an outlet line, wherein the automaton regulates the operation of the valves of the inlet line (17) and the bypass line (24) based on consumers' requirements.

6. The portable device for the boration of continuously flowing water according to any of claims 1 to 5, **characterised in that** the raw water inlet line (17) is fed both by a main raw water inlet line (18) and by a secondary raw water inlet line (19).

7. The portable device for the boration of continuously flowing water according to any of claims 1 to 6, **characterised in that** the mixer (3) is a cylindrical mixer with a frustoconical base, comprising a stirring vane and deflector plates.

8. The portable device for the boration of continuously flowing water according to any of claims 1 to 7 **characterised in that** the boric acid feeding system comprises a support structure (7) for supporting a bag of boric acid powder from which boric acid is poured onto the conveyor (16) where the support structure (7) is installed on a telescopic structure (9), susceptible of lifting said support structure (7) in order to facilitate the supply of bags (8) of boric acid.

9. The portable device for the boration of continuously flowing water according to claim 8, **characterised in that** under the support structure (7) there is arranged a conical tank into which boric acid is poured, wherein the monitoring and control system produces a warning when the product in the bag (8) has been emptied.

10. The portable device for the boration of continuously flowing water according to any of claims 8 to 9, **characterised in that** the support structure (7) comprises a set of "massaging elements" for the bag formed by a set of pneumatic cylinders (11) which press on the bag and ensure that all the product inside the bag is emptied.

11. The portable device for the boration of continuously flowing water according to any of claims 8 to 10, **characterised in that** there is arranged in the support structure (7) a capture system connected to a boric acid powder suction system, with self-cleaning filters, and a confinement system for confining said boric acid powder.

12. The portable device for the boration of continuously flowing water according to claim 11, **characterised in that** the capture system is formed by a capture ring (13) through which the powder is suctioned and directed towards a confinement tank (14).

13. The portable device for the boration of continuously flowing water according to any of claims 1 to 12, **characterised in that** the system for detecting and automatically opening a bag (8) of boric acid powder comprises a set of blades (12) which cut the lower part of the bag.

14. The portable device for the boration of continuously flowing water according to any of claims 1 to 13, **characterised in that** the system comprises a roller crusher (15) through which boric acid powder passes before being placed on the conveyor (16).

15. The portable device for the boration of continuously flowing water according to any of claims 1 to 14, **characterised in that** the container (1) furthermore has a hook (2) for a truck with an "Ampliroll" system.

## Patentansprüche

1. Tragbare Vorrichtung zur Borierung von kontinuierlich fließendem Wasser, umfassend:
• einen mechanischen Mischer (3), wobei der Mischer (3) eine Rohwassereinlassöffnung (4), einen Borsäurepulvereinlass (5) und eine Borwasserauslassöffnung (6) aufweist, die zu einer Borwasserauslassleitung (21) gerichtet ist; wobei der Mischer elektrische Widerstände enthält,
• eine Rohwassereinlassleitung (17) für den Einlass von Rohwasser in den Mischer (3), die mit einem Durchflussregler versehen ist;
• ein Borsäurepulverzuführsystem, das mit einem Förderer (16) mit variabler Geschwindigkeit ausgestattet ist, zur Förderung des Borsäurepulvers zum Borsäureeinlass (5) des Mischers (3);
• eine Auslassleitung (21) des Mischers, die mit einer Pumpvorrichtung und einem Durchflussregler ausgestattet ist;
**dadurch gekennzeichnet, dass**:
die Vorrichtung in einem Transportbehälter (1) integriert ist;
und dass das Borsäurepulverzuführsystem mit einem System zum Erkennen und automatischen Öffnen eines Beutels (8) mit Borsäurepulver ausgestattet ist;
und dass die Vorrichtung ein Überwachungs- und Steuerungssystem umfasst, das aus folgenden Elementen besteht:
∘ einem Automaten, der die verschiedenen Signale der Messgeräte, Alarme aufgrund anormaler Betriebswerte und die Ausführung der folgenden automatischen Vorgänge verwaltet:
Verwaltung des Wasserstands im Mischer durch Regulierung der Durchflussmengen des in den Mischer ein- und austretenden Wassers;
Verwaltung der Geschwindigkeit des Borsäureförderers in Abhängigkeit von der Durchflussmenge des einströmenden Wassers, um die Konzentration der Borsäure zu regulieren,
Steuerung der Wassertemperatur und Ansteuern der elektrischen Widerstände des Mischers,
Verwaltung des Systems zum Erkennen und automatischen Öffnen eines Beutels mit Borsäurepulver;
o eine Fernüberwachungsvorrichtung, über die der Bediener den Betriebszustand des Systems aus der Ferne erkennen kann und bei Bedarf Alarme empfängt.

2. Tragbare Vorrichtung zur Borierung von kontinuierlich fließendem Wasser nach Anspruch 1, **dadurch gekennzeichnet, dass** das Überwachungs- und Steuerungssystem außerdem eine HMI (Mensch--Maschine-Schnittstelle) umfasst, die die Anzeige des Betriebszustands des Systems sowie die Durchführung entsprechender Einstellungen ermöglicht.

3. Tragbare Vorrichtung zur Borierung von kontinuierlich fließendem Wasser nach einem der Ansprüche 1 bis 2, **dadurch gekennzeichnet, dass** an die Wassereinlassleitung (17) ferner eine Überschussleitung (20) angeschlossen ist, die einen Betrieb mit geringeren Durchflussmengen als der minimalen Betriebsdurchflussmenge einer Förderpumpe ermöglicht.

4. Tragbare Vorrichtung zur Borierung von kontinuierlich fließendem Wasser nach einem der Ansprüche 1 bis 3, **dadurch gekennzeichnet, dass** die Borwasserauslassleitung (21) in eine Hauptauslassleitung (22) und eine Nebenauslassleitung (23) aufgeteilt ist, wobei der Automat die Betätigung der Ventile der Auslassleitungen entsprechend den Anforderungen der Verbraucher regelt.

5. Tragbare Vorrichtung zur Borierung von kontinuierlich fließendem Wasser nach einem der Ansprüche 1 bis 4, **dadurch gekennzeichnet, dass** zwischen der Einlassleitung (17) und einer Auslassleitung ferner eine Bypassleitung (24) vorhanden ist, wobei der Automat die Betätigung der Ventile der Einlassleitung (17) und der Bypassleitung (24) entsprechend den Anforderungen der Verbraucher regelt.

6. Tragbare Vorrichtung zur Borierung von kontinuierlich fließendem Wasser nach einem der Ansprüche 1 bis 5, **dadurch gekennzeichnet, dass** die Rohwassereinlassleitung (17) sowohl von einer Hauptrohwassereinlassleitung (18) als auch von einer Nebenrohwassereinlassleitung (19) gespeist wird.

7. Tragbare Vorrichtung zur Borierung von kontinuierlich fließendem Wasser nach einem der Ansprüche 1 bis 6, **dadurch gekennzeichnet, dass** der Mischer (3) ein zylindrischer Mischer mit kegelstumpfförmigem Boden ist, der einen Rührflügel und Ablenkplatten umfasst.

8. Tragbare Vorrichtung für die Borierung von kontinuierlich fließendem Wasser nach einem der Ansprüche 1 bis 7, **dadurch gekennzeichnet, dass** das Borsäurezuführsystem eine Tragstruktur (7) zur Aufnahme eines Beutels mit Borsäurepulver umfasst, aus dem Borsäure auf den Förderer (16) geschüttet wird, wobei die Tragstruktur (7) auf einer teleskopierbaren Struktur (9) angebracht ist, die in der Lage ist, die Tragstruktur (7) anzuheben, um die Zufuhr von Beuteln (8) mit Borsäure zu erleichtern.

9. Tragbare Vorrichtung zur Borierung von kontinuierlich fließendem Wasser nach Anspruch 8, **dadurch gekennzeichnet, dass** unter der Tragstruktur (7) ein konischer Behälter angeordnet ist, in den Borsäure eingefüllt wird, wobei das Überwachungs- und Steuerungssystem eine Warnung ausgibt, wenn das Produkt im Beutel (8) entleert ist.

10. Tragbare Vorrichtung zur Borierung von kontinuierlich fließendem Wasser nach einem der Ansprüche 8 bis 9, **dadurch gekennzeichnet, dass** die Tragstruktur (7) eine Gruppe von "Massageelementen" für den Beutel umfasst, die aus einer Gruppe von pneumatischen Zylindern (11) bestehen, die auf den Beutel drücken, um sicherzustellen, dass das gesamte Produkt im Inneren des Beutels entleert wird.

11. Tragbare Vorrichtung zur Borierung von kontinuierlich fließendem Wasser nach einem der Ansprüche 8 bis 10, **dadurch gekennzeichnet, dass** in der Tragstruktur (7) ein Auffangsystem angeordnet ist, das mit einem Absaugsystem für Borsäurepulver verbunden ist, mit selbstreinigenden Filtern und einem Einschlusssystem zum Einschluss des Borsäurepulvers angeordnet ist.

12. Tragbare Vorrichtung zur Borierung von kontinuierlich fließendem Wasser nach Anspruch 11, **dadurch gekennzeichnet, dass** das Auffangsystem aus einem Auffangring (13) besteht, durch den das Pulver angesaugt und zu einem Einschlussbehälter (14) geleitet wird.

13. Tragbare Vorrichtung zur Borierung von kontinuierlich fließendem Wasser nach einem der Ansprüche 1 bis 12, **dadurch gekennzeichnet, dass** das System zum Erkennen und automatischen Öffnen eines Beutels (8) mit Borsäurepulver einen Satz von Klingen (12) umfasst, die den unteren Teil des Beutels abschneiden.

14. Tragbare Vorrichtung zur Borierung von kontinuierlich fließendem Wasser nach einem der Ansprüche 1 bis 13, **dadurch gekennzeichnet, dass** das System einen Walzenbrecher (15) umfasst, durch den das Borsäurepulver läuft, bevor es auf den Förderer (16) gelangt.

15. Tragbare Vorrichtung zur Borierung von kontinuierlich fließendem Wasser nach einem der Ansprüche 1 bis 14, **dadurch gekennzeichnet, dass** der Behälter (1) außerdem einen Haken (2) für einen LKW mit einem "Ampliroll"-System aufweist.

## Revendications

1. Dispositif portable pour la boration d'eau en écoulement continu, comprenant :
• un mélangeur mécanique (3), le mélangeur (3) comprend une ouverture d'admission d'eau brute (4), une admission de poudre d'acide borique (5), et une ouverture d'évacuation d'eau borée (6) dirigée vers une conduite d'évacuation d'eau borée (21) ; dans lequel le mélangeur incorpore des résistances électriques,
• une conduite d'admission d'eau brute (17) pour l'entrée d'eau brute dans le mélangeur (3), équipée de moyens de régulation de débit d'écoulement ;
• un système d'alimentation en poudre d'acide borique doté d'un convoyeur à vitesse variable (16) permettant de convoyer de la poudre d'acide borique jusqu'à l'admission d'acide borique (5) du mélangeur (3) ;
• une conduite d'évacuation (21) du mélangeur pourvue de moyens de pompage et de régulation de débit d'écoulement ;
**caractérisé en ce que** :
le dispositif est intégré dans un conteneur de transport (1) ;
et **en ce que** le système d'alimentation en poudre d'acide borique est doté d'un système de détection et d'ouverture automatique d'un sac (8) de poudre d'acide borique ;
et **en ce que** le dispositif comprend un système de surveillance et de contrôle formé par les éléments suivants :
∘ un automate qui gère les différents signaux d'instrumentation, les alarmes dues à des valeurs de fonctionnement anormales et l'exécution des opérations automatiques suivantes :
gérer le niveau d'eau dans le mélangeur par des moyens de régulation de débits d'écoulement d'eau entrant et sortant du mélangeur ;
gérer la vitesse du convoyeur d'acide borique en fonction du débit d'écoulement d'eau affluente pour réguler la concentration d'acide borique,
contrôler la température de l'eau et actionner les résistances électriques du mélangeur,
gérer le système de détection et d'ouverture automatique d'un sac de poudre d'acide borique ;
∘ un dispositif de surveillance à distance à travers lequel l'opérateur peut connaître à distance l'état de fonctionnement du système, recevant des alarmes lorsque le système nécessite une attention.

2. Dispositif portable pour la boration d'eau en écoulement continu selon la revendication 1, **caractérisé en ce que** le système de surveillance et de contrôle comprend en outre un écran d'affichage d'IHM, interface homme-machine, qui permet de visualiser l'état de fonctionnement du système, ainsi que de réaliser des ajustements pertinents.

3. Dispositif portable pour la boration d'eau en écoulement continu selon l'une quelconque des revendications 1 à 2, **caractérisé en ce que** raccordée à la conduite d'admission d'eau (17) il y a en outre une conduite de surplus (20), qui permet de fonctionner avec des débits d'écoulement inférieurs au débit d'écoulement minimum de fonctionnement d'une pompe d'approvisionnement.

4. Dispositif portable pour la boration d'eau en écoulement continu selon l'une quelconque des revendications 1 à 3, **caractérisé en ce que** la conduite d'évacuation d'eau borée (21) est divisée en une conduite d'évacuation principale (22) et une conduite d'évacuation secondaire (23), dans lequel l'automate régule le fonctionnement des vannes des conduites d'évacuation en fonction des besoins des consommateurs.

5. Dispositif portable pour la boration d'eau en écoulement continu selon l'une quelconque des revendications 1 à 4, **caractérisé en ce qu'**il y a en outre une conduite de dérivation (24) entre la conduite d'admission (17) et une conduite d'évacuation, dans lequel l'automate régule le fonctionnement des vannes de la conduite d'admission (17) et de la conduite de dérivation (24) en fonction des besoins des consommateurs.

6. Dispositif portable pour la boration d'eau en écoulement continu selon l'une quelconque des revendications 1 à 5, **caractérisé en ce que** la conduite d'admission d'eau brute (17) est alimentée à la fois par une conduite d'admission d'eau brute principale (18) et par une conduite d'admission d'eau brute secondaire (19).

7. Dispositif portable pour la boration d'eau en écoulement continu selon l'une quelconque des revendications 1 à 6, **caractérisé en ce que** le mélangeur (3) est un mélangeur cylindrique avec une base tronconique, comprenant une aube d'agitation et des plaques déflectrices.

8. Dispositif portable pour la boration d'eau en écoulement continu selon l'une quelconque des revendications 1 à 7, **caractérisé en ce que** le système d'alimentation en acide borique comprend une structure de support (7) permettant de supporter un sac de poudre d'acide borique à partir duquel de l'acide borique est versé sur le convoyeur (16) où la structure de support (7) est installée sur une structure télescopique (9), susceptible de soulever ladite structure de support (7) afin de faciliter l'approvisionnement en sacs (8) d'acide borique.

9. Dispositif portable pour la boration d'eau en écoulement continu selon la revendication 8, **caractérisé en ce que** sous la structure de support (7) est agencé un réservoir conique dans lequel est versé de l'acide borique, dans lequel le système de surveillance et de contrôle produit un avertissement lorsque le produit dans le sac (8) a été vidé.

10. Dispositif portable pour la boration d'eau en écoulement continu selon l'une quelconque des revendications 8 à 9, **caractérisé en ce que** la structure de support (7) comprend un ensemble « d'éléments de massage » pour le sac formé par un ensemble de cylindres pneumatiques (11) qui pressent sur le sac et garantissent que tout le produit à l'intérieur du sac est vidé.

11. Dispositif portable pour la boration d'eau en écoulement continu selon l'une quelconque des revendications 8 à 10, **caractérisé en ce qu'**il y a agencé dans la structure de support (7) un système de capture relié à un système d'aspiration de poudre d'acide borique, avec des filtres autonettoyants, et un système de confinement permettant de confiner ladite poudre d'acide borique.

12. Dispositif portable pour la boration d'eau en écoulement continu selon la revendication 11, **caractérisé en ce que** le système de capture est formé par un anneau de capture (13) à travers lequel la poudre est aspirée et dirigée vers un réservoir de confinement (14).

13. Dispositif portable pour la boration d'eau en écoulement continu selon l'une quelconque des revendications 1 à 12, **caractérisé en ce que** le système de détection et d'ouverture automatique d'un sac (8) de poudre d'acide borique comprend un ensemble de lames (12) qui coupent la partie inférieure du sac.

14. Dispositif portable pour la boration d'eau en écoulement continu selon l'une quelconque des revendications 1 à 13, **caractérisé en ce que** le système comprend un broyeur à rouleaux (15) à travers lequel de la poudre d'acide borique passe avant d'être placée sur le convoyeur (16).

15. Dispositif portable pour la boration d'eau en écoulement continu selon l'une quelconque des revendications 1 à 14, **caractérisé en ce que** le conteneur (1) a en outre un crochet (2) pour un camion équipé d'un système « Ampliroll ».
